# EUROPÄISCHE PATENTSCHRIFT

(11) **EP 3 108 620 B1**
(45) Veröffentlichungstag und Bekanntmachung des Hinweises auf die Patenterteilung: **17.07.2019**
(21) Anmeldenummer: 15703574.2
(22) Anmeldetag: 09.02.2015
(51) Int. Cl.: H04L 12/40, H04L 12/403, H04L 12/417, H04L 12/12

(54) **ENERGIESPARENDER BETRIEB EINES KOMMUNIKATIONSSYSTEMS**
ENERGY-SAVING OPERATION OF A COMMUNICATION SYSTEM
FONCTIONNEMENT EN ÉCONOMIE D'ÉNERGIE D'UN SYSTÈME DE COMMUNICATION

(30) Priorität: 20.02.2014 DE 102014203072
(43) Veröffentlichungstag der Anmeldung: 28.12.2016
(73) Patentinhaber: Robert Bosch GmbH, 70442 Stuttgart (DE)
(72) Erfinder: MUELLER, Andreas, 71336 Waiblingen (DE)
(86) Internationale Anmeldenummer: PCT/EP2015/052609
(87) Internationale Veröffentlichungsnummer: WO 2015/124451

(56) Entgegenhaltungen:
- WO-A1-2010/119370
- WO-A1-2013/167679

## Beschreibung

Die vorliegende Erfindung betrifft ein Verfahren zum Betrieb eines Kommunikationssystems, insbesondere zur Verringerung eines Energieverbrauchs

### Stand der Technik

Mögliche Kommunikationssysteme umfassen mehrere Kommunikationseinheiten bzw. Knoten (auch als "Nodes" bezeichnet), meist eine zentrale Instanz (auch "Master" oder "Koordinator" genannt) sowie ein gemeinsam genutztes Kommunikationsmedium (auch als "gemeinsames Übertragungsmedium" oder "Shared Medium" bezeichnet).

Ein prinzipielles Problem bei einem solchen Kommunikationssystem ist die Steuerung des Zugriffs auf das "Shared Medium", weil bei der gleichzeitigen Verwendung derselben Ressourcen von unterschiedlichen Knoten in der Regel eine erfolgreiche (d.h. fehlerfreie) Übertragung unmöglich wird. Hierbei gibt es eine Vielzahl von verschiedenen Freiheitsgraden und möglichen Ausprägungen sowie viele verschiedene Optimierungsrichtungen, beispielsweise hinsichtlich Durchsatzes, Fairness, Echtzeitfähigkeit etc.

Generell ist eine Unterscheidung zwischen konkurrierenden und koordinierten Medienzugriffsverfahren möglich.

Bei konkurrierenden Verfahren kann es grundsätzlich vorkommen, dass zwei oder mehrere Knoten gleichzeitig auf das "Shared Medium" zugreifen und entsprechende Daten übertragen wollen, was dann eine Kollision auf dem gemeinsamen Übertragungsmedium zur Folge hat. Beispiele für diese Art von Verfahren sind (Slotted) ALOHA, Carrier Sense Multiple Access (CSMA) und CSMA mit Kollisionsdetektion (CSMA/CD, eingesetzt u.a. in den Ethernet-Varianten 10BASE5 und 10BASE2).

Anders als bei konkurrierenden Verfahren sollten bei koordinierten Medienzugriffsverfahren im fehlerfreien Fall keine Kollisionen durch einen gleichzeitigen Zugriff mehrerer Knoten auf das "Shared Medium" auftreten. Die Koordination des Medienzugriffs kann dabei statisch erfolgen, wie z.B. bei statischen Zeitmultiplexverfahren, bei denen jeder Knoten periodisch für eine gewisse Zeit exklusiv das "Shared Medium" zur Übertragung nutzen darf. Dies kann beispielsweise mit Hilfe eines statisch festgelegten Ablaufplans ("Schedule"), der allen Knoten bekannt ist, in Verbindung mit einer zeitlichen Synchronisation aller Knoten erfolgen. Alternativ kann die Koordination mit Hilfe einer Steuerung durch eine zentrale Instanz realisiert werden, wie beispielsweise bei einem klassischen Pollingverfahren. Darüber hinaus ist aber auch eine verteilte Koordination möglich, was z.B. bei Verfahren wie "Token Ring" oder "Token Bus" zur Anwendung kommt.

Die Reduktion des Energieverbrauchs einzelner Knoten in einem solchen Kommunikationssystem ist generell ein sehr wichtiges Thema. Dies gilt klassischerweise insbesondere für drahtlose Kommunikationssysteme (z.B. drahtlose Sensornetzwerke), da hier einzelne Knoten oftmals batteriebetrieben sind oder gar Energy-Harvesting betreiben, d.h. ihre Energie aus der Umgebung selbst gewinnen.

Prinzipiell gilt dies natürlich aber auch für drahtgebundene Systeme, beispielsweise wenn einzelne Knoten über die Kommunikationsleitung mit Energie versorgt werden sollen oder generell der Energieverbrauch minimiert werden soll, um z.B. Betriebskosten zu sparen.

Die Grundidee der meisten Ansätze geht normalerweise dahin, dass ein Knoten zwischen einem regulären Betriebszustand, in dem er voll funktionsfähig ist, und einem oder mehreren besonderen Schlafzuständen, im Folgenden auch allgemein als Standby-Modus bezeichnet, mit eingeschränkter Funktionalität hin- und herwechselt. So könnte ein Knoten in einem Schlafzustand beispielsweise jegliche Funktionen bis auf einen Timer zum Wechsel zurück in den regulären Betriebszustand abschalten, einschließlich aller Kommunikationsfunktionen, so dass der Knoten in diesem Zustand nicht ansprechbar ist.

Verschiedene mögliche Ansätze sind bspw. die Folgenden:
Durch eine externe Antriggerung beispielsweise kann ein Knoten durch Anlegen eines bestimmten (elektrischen) Signals aufgeweckt werden. Ein möglicher Anwendungsfall hierfür ist z.B. ein Schalter, der nur bei Änderungen des Schaltzustandes eine entsprechende Zustandsänderung an einen anderen Knoten (z.B. Gateway oder zentrale Steuerung) übertragen muss.

Ein Wechsel zwischen Betriebszuständen periodisch in einem festen Raster ist insbesondere für Kommunikationssysteme eine Option, bei denen beispielsweise periodisch ein bestimmtes Beacon-Frame übertragen wird, nach dem gezielt Übertragungen stattfinden können bzw. mit dem bevorstehende Übertragungen angekündigt werden können, oder aber auch für Kommunikationssysteme mit einem festen Zeitraster, bei denen z.B. Zeitschlitze fester Größe definiert sind und jedem Knoten mindestens ein Zeitschlitz zugewiesen ist. Ein Knoten könnte sich in diesem Fall somit außerhalb seiner Zeitschlitze ohne weiteres im Schlafzustand befinden.

Aus der DE 10 2011 084 740 A1 ist bspw. ein Verfahren zur Datenübermittlung bekannt, bei dem zur Energiereduzierung ein Datenpaket in einen Header und eine Payload aufgeteilt wird, wobei der Header mit einem weniger komplexen Modus übertragen wird als die Payload.

Aus der WO2010/119370 A1 ist bspw. ein Verfahren zur Datenübermittlung bekannt, bei dem Kommunikationseinheit in einem Netzwerk aus einem Standby-Modus erwacht und anschließend prüft, ob sie Daten senden darf. Hierzu wird solange der Zugriff auf das Netzwerk erfragt, bis eine weitere Kommunikationseinheit die Bereitschaft zum Empfang der Daten signalisiert.

Aus der WO 2013/167679 A1 ist bspw. ein Verfahren zur Datenübertragung bekannt, wobei ein Sender und ein Empfänger erst nach einer bestimmten Aktivierungszeit zur Übertragung bereitstehen.

Aufgabe der vorliegenden Erfindung ist es, ein Kommunikationsverfahren für ein Kommunikationssystem bereitzustellen, das flexible Wechsel zwischen Betriebszuständen und lange Zeitdauern in einem energiesparenden Zustand ermöglicht und einen möglichst effizienten Energieverbrauch aufweist.

### Offenbarung der Erfindung

Erfindungsgemäß wird ein Verfahren mit den Merkmalen des Patentanspruchs 1 vorgeschlagen. Vorteilhafte Ausgestaltungen sind Gegenstand der Unteransprüche sowie der nachfolgenden Beschreibung.

### Vorteile der Erfindung

Bei einem erfindungsgemäßen Verfahren zum Betrieb eines Kommunikationssystems, insbesondere eines drahtlosen oder eines drahtgebundenen Kommunikationssystems, welches eine Mehrzahl von Kommunikationseinheiten, die an ein Kommunikationsmedium angebunden sind, aufweist, wird den Kommunikationseinheiten in einer vorgegebenen Reihenfolge Zugriff auf das Kommunikationsmedium gewährt. Eine Kommunikationseinheit prüft nach Beenden eines Standby-Modus, ob ihr Zugriff gewährt wird, und wechselt später, ggf. nach einem Zugriff, für eine Pausendauer, bis ihr voraussichtlich wieder, d.h. das nächste Mal, Zugriff gewährt werden wird, wieder in den Standby-Modus, wenn die Kommunikationseinheit keinen Zugriff auf das Kommunikationsmedium benötigt oder ihr kein Zugriff gewährt wird. Die Kommunikationseinheit benötigt keinen Zugriff auf das Kommunikationsmedium, wenn sie keine Daten senden will oder nachdem sie alle Daten gesendet hat.

Im Rahmen der Erfindung kann somit jede Kommunikationseinheit für eine absehbare Pausendauer, in der sie ohnehin keinen Zugriff auf das Kommunikationsmedium erhalten wird, in einen Standby-Modus wechseln, um so Energie zu sparen. Dies ermöglicht eine Betriebsruhe individuell für jede der Kommunikationseinheiten. Die Pausendauer kann somit möglichst lange andauern, was zu einer möglichst großen Energieeinsparung führt. Zudem bietet das Verfahren aufgrund der dezentralen Struktur eine hohe Flexibilität. Zudem wird gewährleistet, dass sich die Kommunikationseinheit voraussichtlich dann, wenn ihr gemäß der Reihenfolge das nächste Mal Zugriff auf das Kommunikationsmedium gewährt wird, nicht mehr im Standby-Modus befindet, trotzdem aber eine möglichst lange Pausendauer Energie einsparen kann.

Da nicht mit Sicherheit vorherbestimmt werden kann, wie viele Kommunikationseinheiten für wie lange (Zugriffsdauer) auf das Kommunikationssystem zugreifen werden, kann es vorkommen, dass der Kommunikationseinheit, wenn sie ihren Standby-Modus beendet, noch kein Zugriff gewährt wird, sondern noch eine andere Kommunikationseinheit an der Reihe ist. In diesem Fall erhält die Kommunikationseinheit keinen Zugriff und kann erneut in den Standby-Modus wechseln, um weiter Energie zu sparen. Dabei wird insbesondere wieder berücksichtigt, wann der Kommunikationseinheit voraussichtlich wieder Zugriff gewährt werden wird. Diese Schritte können von der Kommunikationseinheit vorzugsweise wiederholt werden, solange die ermittelte Pausendauer größer als ein vorbestimmter Schwellwert ist, da dann ein Wechsel in den Standby-Modus bspw. nicht mehr effizient wäre. Damit kann die gesamte Zeit im Standby-Modus der Kommunikationseinheit möglichst lange gestaltet werden.

Außerdem kann dadurch eine mögliche Lebensdauer einer Kommunikationseinheit erhöht werden, falls diese bspw. über eine Batterie versorgt wird. Auch kann eine Erhöhung der Energieeffizienz zu einer Verbesserung der Kohlenstoffdioxid-Bilanz führen. Auch ist damit eine einfache und kostengünstige Unterstützung von Energy-Harvesting gegeben. Wenn bspw. weniger Energie verbraucht wird, verringern sich auch die Kosten.

Vorzugsweise greift die Kommunikationseinheit auf das Kommunikationsmedium zu, wenn ihr gemäß der Reihenfolge Zugriff gewährt wird und wechselt danach wieder für die Pausendauer in den Standby-Modus. Dadurch kann jede Kommunikationseinheit individuell auf das Kommunikationsmedium zugreifen und zwar insbesondere für eine wahlfreie Zugriffsdauer. Dadurch ist das Kommunikationssystem besonders flexibel.

Vorteilhafterweise umfasst das Kommunikationssystem zusätzlich eine Steuereinheit. Der Kommunikationseinheit wird dann durch eine Abfrage-Nachricht von der Steuereinheit Zugriff auf das Kommunikationsmedium, weiterhin entsprechend der vorgegeben Reihenfolge, gewährt. Die Kommunikationseinheit kann den Zugriff entweder wahrnehmen oder mittels einer Antwort-Nachricht ablehnen. Ebenso kann die Kommunikationseinheit auch eine Antwortdauer verstreichen lassen, womit erkennbar wird, dass kein Zugriff benötigt wird. Dadurch kann das Verfahren auch für Kommunikationssysteme eingesetzt werden, die eine Steuereinheit umfassen und insbesondere dann auch von dieser gesteuert werden.

Es ist von Vorteil, wenn bei der Bestimmung der Pausendauer ein einheitenspezifischer und/oder ein einheitenunabhängiger Offset berücksichtigt werden. Damit können bspw. Einschlaf- und/oder Aufwachzeiten einer Kommunikationseinheit, die je nach Kommunikationseinheit unterschiedlich sein können, berücksichtigt werden.

Es ist insbesondere von Vorteil, wenn die Pausendauer einer Zeitdauer entspricht, nach welcher der Kommunikationseinheit gemäß der Reihenfolge wieder Zugriff auf das Kommunikationssystem gewährt werden wird, unter der Annahme, dass keine der dazwischen liegenden Kommunikationseinheiten auf das Kommunikationsmedium zugreift, also eine ihnen jeweils ggf. vorgegebene Antwortdauer einfach verstreichen lassen. Dies entspricht der Mindestzeitdauer, bis die Kommunikationseinheit frühestens wieder auf das Kommunikationssystem zugreifen können wird.

Alternativ entspricht die Pausendauer einer Zeitdauer, nach welcher der Kommunikationseinheit gemäß der Reihenfolge wieder Zugriff auf das Kommunikationssystem gewährt werden wird, unter der Annahme, dass eine bestimmte Anzahl der dazwischen liegenden Kommunikationseinheiten für eine vorbestimmte Zugriffsdauer auf das Kommunikationssystem zugreifen. Wenn, bspw. unter Berücksichtigung von statistischen Werten, gut abgeschätzt werden kann, wie viele Kommunikationseinheiten wie lange voraussichtlich auf das Kommunikationssystem zugreifen werden, kann die Pausendauer, während welcher die Kommunikationseinheit sich im Standby-Modus befindet, optimal verlängert werden, wodurch mehr Energie eingespart werden kann.

Alternativ oder zusätzlich wird die Pausendauer statisch oder dynamisch durch die Steuereinheit vorgegeben und/oder angepasst. Damit kann das Kommunikationssystem flexibler gestaltet werden.

Vorzugsweise wird der Schwellwert von der Steuereinheit statisch oder dynamisch angepasst. Damit kann bspw. auf unterschiedliche Betriebsarten oder Betriebszeiten reagiert werden und die Energieeinsparung noch effizienter gestaltet werden.

Es ist auch von Vorteil, wenn die Kommunikationseinheit beim Berechnen der Pausendauer einen Zeitpunkt, zu dem die Kommunikationseinheit voraussichtlich eine Nachricht empfangen wird, berücksichtigt. Dies ist besonders dann vorteilhaft, wenn die Kommunikationseinheit dafür vorgesehen ist, selbst auch Nachrichten zu empfangen. Wenn bekannt ist, wann und/oder von welcher anderen Kommunikationseinheit die Kommunikationseinheit voraussichtlich eine Nachricht empfangen wird, kann der Zeitpunkt des Wechsels in den Standby-Modus oder die Pausendauer entsprechend angepasst oder geändert werden.

Vorteilhafterweise ist eine Kommunikationseinheit auch dazu eingerichtet, dass der Standby-Modus durch die Steuereinheit aktiviert (freigeschaltet) und/oder deaktiviert (gesperrt) werden kann. Ein dauerhafter bzw. über einen längeren Zeitraum andauernder Betrieb einer Kommunikationseinheit kann bspw. für sicherheitsrelevante Anwendungen nötig sein. Hierfür würde der Standby-Modus der Kommunikationseinheit von der Steuereinheit deaktiviert, so dass die Kommunikationseinheit bis zu einer Re-Aktivierung nicht in den Standby-Modus wechselt.

Es ist weiter auch von Vorteil, wenn die Kommunikationseinheit erst nach Erhalt einer Standby-Nachricht von der Steuereinheit in den Standby-Modus wechselt. Damit kann durch die Steuereinheit vorgesehen werden, weitere Nachrichten an die Kommunikationseinheit zu senden, bevor diese in den Standby-Modus wechselt.

Eine erfindungsgemäße Recheneinheit, insbesondere eine Kommunikationseinheit, ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Die Erfindung eignet sich besonders für die Gebäudeautomatisierung, wobei die nachgeordneten Kommunikationseinheiten als Feldgeräte, wie z.B. Sensoren und/oder Aktuatoren ausgebildet sind. Es kann sich insbesondere um Rauch- und Brandmelder, Bewegungsmelder, Temperaturfühler, Einbruchsmeldesensoren sowie entsprechende Kontroll- und Steuergeräte handeln.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Kurze Beschreibung der Zeichnungen

Figur 1 zeigt schematisch zwei bevorzugte Ausgestaltungen für ein Kommunikationssystem für das ein erfindungsgemäßes Verfahren benutzt werden kann.
Figur 2 zeigt schematisch einen Ablauf eines erfindungsgemäßen Verfahrens in einer bevorzugten Ausgestaltung.
Figur 3 zeigt schematisch einen Ablauf eines erfindungsgemäßen Verfahrens in einer bevorzugten Ausgestaltung.
Figur 4 zeigt schematisch einen Ablauf eines erfindungsgemäßen Verfahrens in einer weiteren bevorzugten Ausgestaltung.

### Ausführungsform(en) der Erfindung

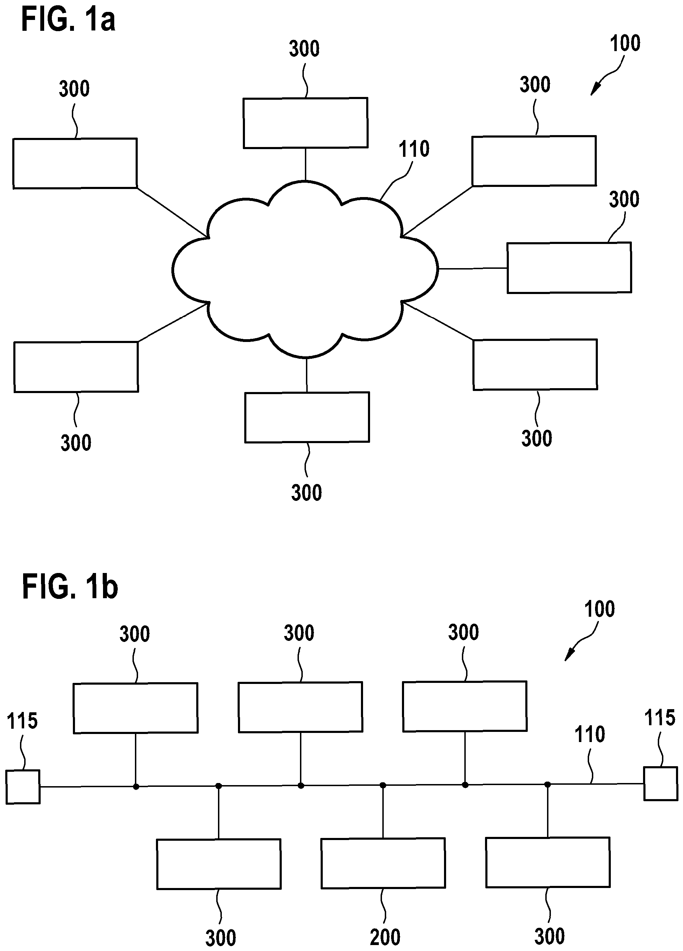

In Figur 1 sind beispielhaft zwei verschiedene Arten von Kommunikationssystemen 100 schematisch dargestellt, für welche ein erfindungsgemäßes Verfahren verwendet werden kann.

Das Kommunikationssystem 100 in Figur 1a weist mehrere Kommunikationseinheiten 300 auf. Ein Kommunikationsmedium 110, auch als "Shared Medium" bezeichnet, mit welchem die Kommunikationseinheiten 300 verbunden sind, ist hier als drahtloses Netzwerk bzw. Medium ausgebildet. Dies ist durch das als Wolke dargestellte Kommunikationsmedium 110 angedeutet.

Das Kommunikationssystem 100 in Figur 1b weist eine Steuereinheit 200 sowie mehrere Kommunikationseinheiten 300 auf, welche in diesem Fall über einen als linearer Bus ausgebildetes Kommunikationsmedium 110 kommunizieren. Weiter sind hier an den Enden des Buses Terminierungen 115 dargestellt.

Ein erfindungsgemäßes Verfahren kann jedoch auch für andere mögliche Arten von Kommunikationssystem eingesetzt werden. Die beiden dargestellten Möglichkeiten sind nur beispielhaft. Ebenso kann an das drahtlose Medium eine Steuereinheit angebunden sein oder an den linearen Bus nicht. Dies hängt davon ab, welche Ausgestaltung des erfindungsgemäßen Verfahrens eingesetzt wird bzw. es hängt vom Umfang des Kommunikationsnetzwerks ab, welche Ausgestaltung des erfindungsgemäßen Verfahrens eingesetzt wird.

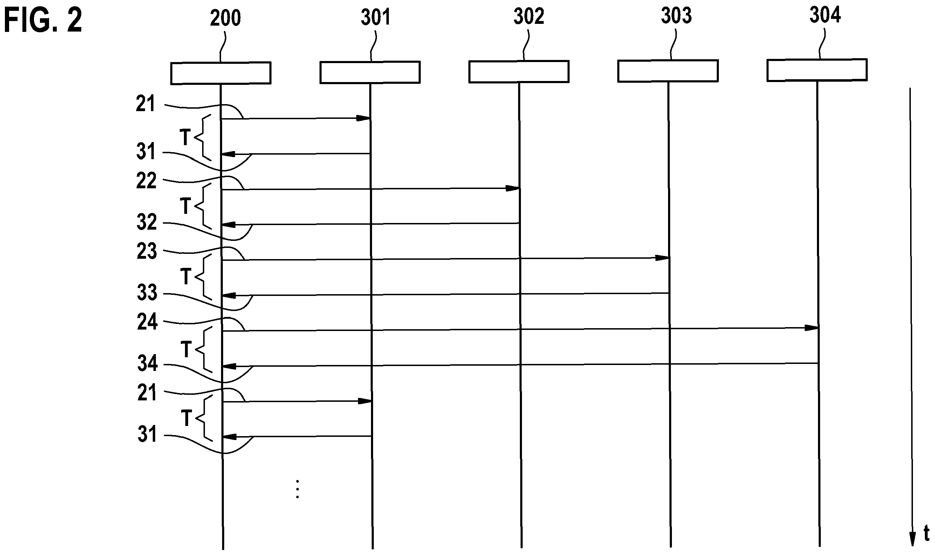

In Figur 2 ist schematisch eine Kommunikation gemäß einer bevorzugten Ausgestaltung eines erfindungsgemäßen Verfahrens zwischen einer Steuereinheit 200 und vier Kommunikationseinheiten 301, 302, 303, 304 dargestellt. An der rechten Seite ist in vertikaler Richtung die Zeit t aufgetragen.

Für jede der Kommunikationseinheiten 301, 302, 303, 304 ist eine vorbestimmte Antwortdauer T vorgesehen, innerhalb welcher einer Kommunikationseinheit Zugriff auf das Kommunikationsmedium gewährt wird, d.h. innerhalb welcher die Kommunikationseinheit ihren - möglichen - Zugriff beginnen darf. Beispielhaft sind diese vorbestimmten Antwortdauern für jede Kommunikationseinheit 301, 302, 303, 304 gleich lang ausgebildet. Je nach Anwendung bzw. Art der Kommunikationseinheit können diese jedoch auch unterschiedlich lange sein.

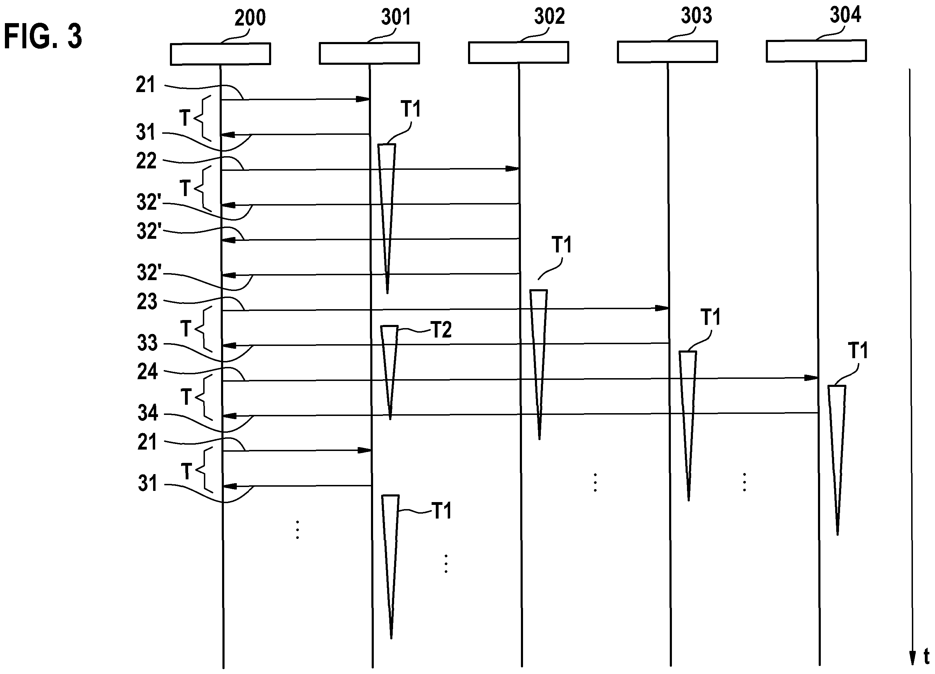

Will die Kommunikationseinheit 301, 302, 303, 304 datenübertragend auf das Kommunikationsmedium zugreifen, beginnt sie spätestens am Ende der Antwortdauer T mit der Übertragung einer positiven Antwortnachricht oder gleich von Daten. Die Zeitdauer, die die Kommunikationseinheit dann insgesamt Zugriff auf das Kommunikationsmedium erhält, falls die Kommunikationseinheit Zugriff benötigt, um Daten zu senden, wird meist länger sein als die Antwortdauer T. Dies hängt von der Menge an Daten ab, die zu senden sind, siehe hierzu auch Figur 3.

Die Reihenfolge, in welcher den Kommunikationseinheiten 301, 302, 303, 304 Zugriff gewährt wird, ist mit 301, 302, 303, 304 festgelegt. Auch dies ist lediglich beispielhaft. Auch ist es denkbar, dass einer oder mehreren Kommunikationseinheiten mehrmals innerhalb eines Zyklus Zugriff gewährt wird, bspw. wenn es sich bei einer Kommunikationseinheit um eine sicherheitskritische Kommunikationseinheit handelt. Denkbar wäre daher z.B. 301, 302, 301, 303, 301, 304. Der Kommunikationseinheit 301 würde hier öfter innerhalb eines Zyklus Zugriff gewährt.

Der Zugriff wird den Kommunikationseinheiten 301, 302, 303, 304 hier beispielhaft gewährt, indem sie jeweils von der Steuereinheit eine Abfragenachricht 21, 22, 23, 24 erhalten. Durch negative Antwortnachrichten 31, 32, 33, 34 teilen die Kommunikationseinheiten 301, 302, 303, 304 der Steuereinheit 200 jeweils mit, dass sie keinen Zugriff auf das Kommunikationsnetzwerk benötigen. Es ist jedoch genau so denkbar, dass die Kommunikationseinheiten 301, 302, 303, 304 die negativen Antwortnachrichten 31, 32, 33, 34 nicht verschicken, sondern die ihnen jeweils zugewiesene vorbestimmte Antwortdauer T einfach - ohne jegliche Aktion - verstreichen lassen.

Bei einem Kommunikationssystem ohne Steuereinheit 200 würden die Kommunikationseinheiten 301, 302, 303, 304 somit keine Abfragenachrichten erhalten, sondern würden die ihnen zugewiesenen vorbestimmten Antwortdauern T einfach verstreichen lassen. Die vorbestimmten Antwortdauern aller Kommunikationseinheiten können bspw. jeder Kommunikationseinheit initial mitgeteilt werden. Ebenso ist es denkbar, dass bei einer Initialisierung des Kommunikationssystems die vorbestimmten Antwortdauern jeweils an die anderen Kommunikationseinheiten versendet werden, wodurch eine Erweiterung oder Reduzierung des Kommunikationssystems um Kommunikationseinheiten möglich ist.

In Figur 3 ist schematisch eine Kommunikation gemäß einer bevorzugten Ausgestaltung eines erfindungsgemäßen Verfahrens zwischen einer Steuereinheit 200 und vier Kommunikationseinheiten 301, 302, 303, 304 dargestellt. An der rechten Seite ist in vertikaler Richtung die Zeit t aufgetragen.

Wie in dem Beispiel in Figur 2 erhält die Kommunikationseinheit 301 zunächst eine Abfragenachricht 21 von der Steuereinheit 200, womit ihr Zugriff auf das Kommunikationsmedium gewährt wird. Mit der negativen Antwortnachricht 31 gibt die Kommunikationseinheit 301 bekannt, dass sie keinen Zugriff benötigt. Nach der negativen Antwortnachricht 31 und nach Ablauf der vorbestimmten Antwortdauer T (falls das Verfahren ohne negative Antwortnachricht 31 durchgeführt wird, einfach nach Ablauf der vorbestimmten Antwortdauer T), wechselt die Kommunikationseinheit 301 für eine Pausendauer T1 in den Standby-Modus.

In dem Standby-Modus ist die Kommunikationseinheit bspw. nicht mehr von außen ansprechbar, sondern es läuft nur noch ein interner Timer, der die Pausendauer misst und die Kommunikationseinheit anschließend wieder aufweckt bzw. den Standby-Modus beendet.

Die Pausendauer T1 entspricht dabei der Zeitdauer, nach welcher der Kommunikationseinheit 301 voraussichtlich das nächste Mal Zugriff gewährt werden wird, sofern keine der dazwischen liegenden Kommunikationseinheiten Zugriff beantragt und daher lediglich jeweils die vorbestimmte Antwortdauer T beansprucht. Zudem kann ein Offset für Aufwachen und/oder Einschlafen berücksichtigt werden.

Hierbei ist auch zu berücksichtigen, dass die Pausendauer T1 für die Kommunikationseinheiten 301, 302, 303, 304 jeweils unterschiedlich sein kann, da auch die vorbestimmten Antwortdauern T der jeweiligen Kommunikationseinheiten jeweils unterschiedlich sein können. Lediglich beispielhaft sind die Antwortdauern T1 für alle Kommunikationseinheiten hier gleich lang ausgebildet.

Anschließend erhält die Kommunikationseinheit 302 eine Abfragenachricht 22 von der Steuereinheit 200, womit ihr Zugriff auf das Kommunikationsmedium gewährt wird. Da die Kommunikationseinheit 302 auf das Kommunikationsmedium zugreifen will, versendet sie innerhalb ihrer vorbestimmten Antwortdauer T eine Nachricht 32' mit Nutzdaten an die Steuereinheit, womit auch mitgeteilt wird, dass möglicherweise noch weitere Nachrichten mit Nutzdaten durch die Kommunikationseinheit 302 versendet werden.

Im weiteren Verlauf versendet die Kommunikationseinheit 302 noch zwei weitere Nachrichten 32' an die Steuereinheit. Damit verschieben sich auch die möglichen Zugriffe der folgenden Kommunikationseinheiten zeitlich nach hinten. Die gesamte Zeitdauer, für die die Kommunikationseinheit 302 Zugriff auf das Kommunikationsmedium hat, ist länger als die Antwortdauer T und hängt von der zu sendenden Datenmenge ab. Erst anschließend, bspw. auch erst nach einer zusätzlichen Wartezeit, wechselt die Kommunikationseinheit 302 für ihre Pausendauer T1 in den Standby-Modus.

Gemäß der Reihenfolge wird nun, durch eine Abfragenachricht 23, der Kommunikationseinheit 303 Zugriff auf das Kommunikationsnetzwerk gewährt. Währenddessen beendet die Kommunikationseinheit 301 den Standby-Modus, da ihre Pausendauer T1 vorbei ist. Da jedoch zu dieser Zeit erst der Kommunikationseinheit 303 Zugriff gewährt wird, weil die Kommunikationseinheit 302 auf das Kommunikationsmedium zugegriffen hat, kann die Kommunikationseinheit 301 erneut eine Pausendauer vorausberechnen, nach welcher ihr frühestens wieder Zugriff gewährt werden wird. Da die vorgegebene Reihenfolge zwingend eingehalten werden muss, wird neben der Kommunikationseinheit 303 noch der Kommunikationseinheit 304 Zugriff gewährt werden, wofür jedes Mal mindestens die vorbestimmte Antwortdauer T vorgesehen ist.

Somit kann die Kommunikationseinheit 301 erneut für eine Pausendauer, die dieses Mal mit T2 bezeichnet ist, da sie sich von der vorherigen Pausendauer T1 unterscheidet, in den Standby-Modus wechseln.

Im Folgenden benötigen weder die Kommunikationseinheit 303 noch die Kommunikationseinheit 304 Zugriff auf das Kommunikationsmedium und wechseln somit jeweils für ihre Pausendauer T1 in den Standby-Modus.

Das Ende des Standby-Modus der Kommunikationseinheit 301 fällt somit mit dem Zeitpunkt, zu dem ihr Zugriff gewährt wird, zusammen. Wäre die Kommunikationseinheit 301 nach Beenden des Standby-Modus noch nicht an der Reihe, könnte sie erneut eine Pausendauer berechnen und erneut in den Standby-Modus wechseln. Dies kann wiederholt werden, solange die Pausendauer größer als ein vorbestimmter Schwellwert ist. Ein solcher Schwellwert ist sinnvoll, da ein Wechsel in den und anschließendes Beenden des Standby-Modus unter einer gewissen Pausendauer nicht mehr effizient oder auch gar nicht mehr möglich wäre.

Eine alternative Festlegung für die Pausendauer T1 bestünde in einer Abschätzung, wie viele Kommunikationseinheiten für wie lange (d.h. welche Zugriffsdauer) voraussichtlich auf das Kommunikationsmedium zugreifen werden. Dazu können bspw. statistische Werte herangezogen werden. Um zu vermeiden, dass in einem solchen Fall eine Kommunikationseinheit den Standby-Modus zu spät beendet, d.h. erst nachdem ihr bereits wieder Zugriff gewährt worden wäre, kann bspw. eine Regelung durch die Steuereinheit erfolgen.

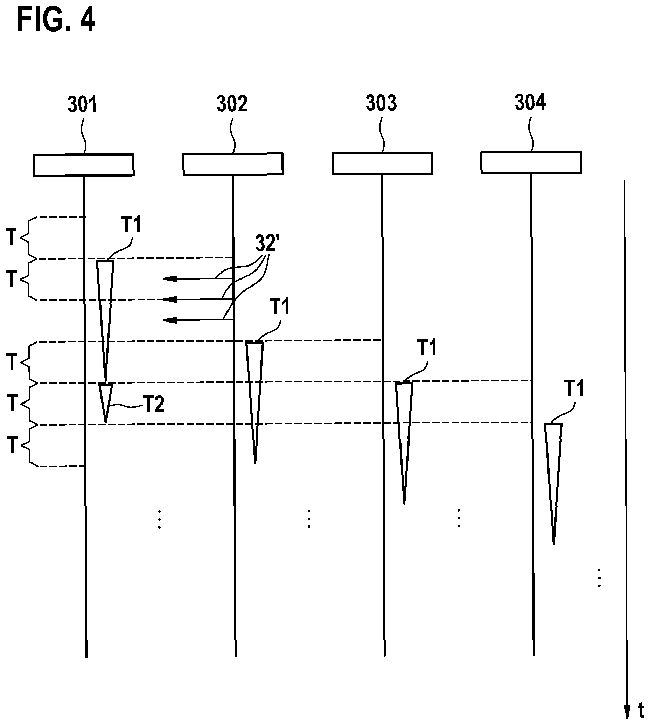

In Figur 4 ist schematisch eine Kommunikation gemäß einer weiteren bevorzugten Ausgestaltung eines erfindungsgemäßen Verfahrens mit vier Kommunikationseinheiten 301, 302, 303, 304 dargestellt. An der rechten Seite ist in vertikaler Richtung die Zeit t aufgetragen

Wie bereits erwähnt, kann das Verfahren auch für ein Kommunikationssystem ohne eine Steuereinheit (oder bspw. ohne Einbeziehen einer solchen) verwendet werden. Die hier dargestellte Ausgestaltung eines erfindungsgemäßen Verfahren läuft so ab wie bei der in Figur 3 dargestellten Ausgestaltung, jedoch mit der Ausnahme, dass die Kommunikationseinheiten 301, 302, 303, 304 nicht die Abfragenachrichten 21, 22, 23, 24 erhalten und daher selbst ermitteln, wann ihnen jeweils Zugriff gewährt wird. Dazu können die Kommunikationseinheiten die Kommunikation auf dem Kommunikationsmedium abhören und somit feststellen, welche Kommunikationseinheit gerade Zugriff hat. Anhand der vorgegebenen Reihenfolge kann jede Kommunikationseinheit somit ermitteln, wann sie an der Reihe ist. Ebenso werden die negativen Antwortnachrichten 31, 32, 33, 34 nicht versendet, da keine Steuereinheit vorhanden ist, die diese empfangen würde.

Die vorbestimmten Antwortdauern und die vorbestimmte Reihenfolge aller Kommunikationseinheiten können bspw. bereits jeder Kommunikationseinheit vorgegeben sein, wie es eingangs auch im Stand der Technik erwähnt wurde. Ebenso ist es denkbar, dass bei einer Initialisierung des Kommunikationssystems die vorbestimmten Antwortdauern jeweils an die anderen Kommunikationseinheiten versendet werden, wodurch eine Erweiterung oder Reduzierung des Kommunikationssystems um Kommunikationseinheiten möglich ist

## Patentansprüche

1. Verfahren zum Betrieb eines Kommunikationssystems (100), welches eine Mehrzahl von Kommunikationseinheiten (300, 301, 302, 303, 304), die an ein Kommunikationsmedium (110) angebunden sind, aufweist,
**dadurch gekennzeichnet, dass** den Kommunikationseinheiten (300, 301, 302, 303, 304) in einer vorgegebenen Reihenfolge Zugriff auf das Kommunikationsmedium (110) gewährt wird,
wobei eine Kommunikationseinheit (300, 301, 302, 303, 304) nach Beenden eines Standby-Modus prüft, ob ihr Zugriff gewährt wird, und für eine Pausendauer (T1, T2), bis ihr voraussichtlich wieder Zugriff gewährt werden wird, wieder in den Standby-Modus wechselt, wenn die Kommunikationseinheit (300, 301, 302, 303, 304) keinen Zugriff auf das Kommunikationsmedium (110) benötigt oder ihr kein Zugriff gewährt wird.

2. Verfahren nach Anspruch 1, wobei die Kommunikationseinheit (300, 301, 302, 303, 304), wenn ihr Zugriff auf das Kommunikationsmedium (110) gewährt wird, auf das Kommunikationsmedium (110) zugreift und danach für die Pausendauer wieder in den Standby-Modus wechselt.

3. Verfahren nach Anspruch 1 oder 2, wobei bei einer Bestimmung der Pausendauer (T1, T2) ein einheitenspezifischer und/oder ein einheitenunabhängiger Offset berücksichtigt wird.

4. Verfahren nach einem der vorstehenden Ansprüche, wobei die Pausendauer (T1, T2) einer Zeitdauer entspricht, nach welcher der Kommunikationseinheit (300, 301, 302, 303, 304) gemäß der Reihenfolge wieder Zugriff auf das Kommunikationsmedium (110) gewährt werden wird, wenn keine der dazwischen liegenden Kommunikationseinheiten (300, 301, 302, 303, 304) auf das Kommunikationsmedium (110) zugreift.

5. Verfahren nach einem der Ansprüche 1 bis 3, wobei die Pausendauer (T1, T2) einer Zeitdauer entspricht, nach welcher der Kommunikationseinheit (300, 301, 302, 303, 304) gemäß der Reihenfolge wieder Zugriff auf das Kommunikationsmedium (110) gewährt werden wird, wenn eine vorbestimmte Anzahl der dazwischen liegenden Kommunikationseinheiten (300, 301, 302, 303, 304) für eine vorbestimmte Zugriffsdauer auf das Kommunikationsmedium zugreifen (110).

6. Verfahren nach einem der vorstehenden Ansprüche, wobei die Kommunikationseinheit (300, 301, 302, 303, 304) beim Berechnen der Pausendauer (T1, T2) einen Zeitpunkt, zu dem die Kommunikationseinheit (300, 301, 302, 303, 304) voraussichtlich eine Nachricht empfangen wird, berücksichtigt.

7. Verfahren nach einem der vorstehenden Ansprüche, wobei das Kommunikationssystem (100) eine Steuereinheit (200) umfasst, wobei der Kommunikationseinheit (300, 301, 302, 303, 304) durch eine Abfragenachricht (21, 22, 23, 24) von der Steuereinheit (200) Zugriff auf das Kommunikationsmedium (110) gewährt wird.

8. Verfahren nach einem der Ansprüche 3 bis 7, wobei die Pausendauer (T1, T2) durch die Steuereinheit (200) statisch oder dynamisch vorgegeben und/oder beeinflusst wird.

9. Verfahren nach einem der Ansprüche 3 bis 8, wobei durch die Steuereinheit (200) der Standby-Modus der Kommunikationseinheit (300, 301, 302, 303, 304) aktiviert und/oder deaktiviert wird.

10. Verfahren nach einem der Ansprüche 3 bis 9, wobei die Kommunikationseinheit (300, 301, 302, 303, 304) erst nach Erhalt einer Standby-Nachricht von der Steuereinheit (200) in den Standby-Modus wechselt.

11. Verfahren nach einem der vorstehenden Ansprüche, wobei die Kommunikationseinheit (300, 301, 302, 303, 304) nur dann wieder in den Standby-Modus wechselt, wenn die Pausendauer (T1, T2) größer als ein vorbestimmter Schwellwert ist.

12. Verfahren nach einem der Ansprüche 3 bis 10, wobei die Kommunikationseinheit (300, 301, 302, 303, 304) nur dann wieder in den Standby-Modus wechselt, wenn die Pausendauer (T1, T2) größer als ein vorbestimmter Schwellwert ist, wobei der Schwellwert durch die Steuereinheit (200) statisch oder dynamisch vorgegeben wird.

13. Verfahren nach einem der vorstehenden Ansprüche, wobei das Kommunikationsmedium (110) ein drahtloses Medium oder drahtgebundenes Medium, insbesondere ein Bus, ist.

14. Recheneinheit, die dazu eingerichtet ist, ein Verfahren nach einem der vorstehenden Ansprüche durchzuführen.

15. Computerprogramm, das eine Recheneinheit dazu veranlasst, ein Verfahren nach einem der Ansprüche 1 bis 13 durchzuführen, wenn es auf der Recheneinheit, insbesondere nach Anspruch 14, ausgeführt wird.

16. Maschinenlesbares Speichermedium mit einem darauf gespeicherten Computerprogramm nach Anspruch 15.

## Claims

1. Method for operating a communication system (100) which has a plurality of communication units (300, 301, 302, 303, 304) which are connected to a communication medium (110),
**characterized in that** the communication units (300, 301, 302, 303, 304) are granted access to the communication medium (110) in a predefined sequence,
wherein, after the end of a standby mode, a communication unit (300, 301, 302, 303, 304) checks whether it is granted access and switches to standby mode once more for a pause duration (T1, T2) until it is likely to be granted access again, if the communication unit (300, 301, 302, 303, 304) does not require access to the communication medium (110) or it is not granted access.

2. Method according to Claim 1, wherein the communication unit (300, 301, 302, 303, 304), if it is granted access to the communication medium (110), accesses the communication medium (110) and thereafter switches back to standby mode for the pause duration.

3. Method according to Claim 1 or 2, wherein a unit-specific and/or a unit-independent offset is taken into account in determining the pause duration (T1, T2).

4. Method according to one of the preceding claims, wherein the pause duration (T1, T2) corresponds to a time duration after which the communication unit (300, 301, 302, 303, 304) is again granted access to the communication system (110) according to the sequence, if none of the intermediate communication units (300, 301, 302, 303, 304) accesses the communication medium (110).

5. Method according to one of Claims 1 to 3, wherein the pause duration (T1, T2) corresponds to a time duration after which the communication unit (300, 301, 302, 303, 304) is again granted access to the communication system (110) according to the sequence, if a predetermined number of intermediate communication units (300, 301, 302, 303, 304) access the communication system (110) for a predetermined access duration.

6. Method according to one of the preceding claims, wherein, when the pause duration (T1, T2) is calculated, the communication unit (300, 301, 302, 303, 304) takes account of a time at which the communication unit (300, 301, 302, 303, 304) is likely to receive a message.

7. Method according to one of the preceding claims, wherein the communication system (100) comprises a control unit (200), wherein the communication unit (300, 301, 302, 303, 304) is granted access to the communication medium (110) by means of a polling message (21, 22, 23, 24) from the control unit (200).

8. Method according to one of Claims 3 to 7, wherein the pause duration (T1, T2) is statically or dynamically predefined and/or influenced by the control unit (200).

9. Method according to one of Claims 3 to 8, wherein the standby mode of the communication unit (300, 301, 302, 303, 304) is activated and/or deactivated by the control unit (200).

10. Method according to one of Claims 3 to 9, wherein the communication unit (300, 301, 302, 303, 304) switches to standby mode only after receiving a standby message from the control unit (200).

11. Method according to one of the preceding claims, wherein the communication unit (300, 301, 302, 303, 304) switches to standby mode again only if the pause duration (T1, T2) is greater than a predetermined threshold value.

12. Method according to one of Claims 3 to 10, wherein the communication unit (300, 301, 302, 303, 304) switches to standby mode again only if the pause duration (T1, T2) is greater than a predetermined threshold value, wherein the threshold value is statically or dynamically predefined by the control unit (200).

13. Method according to one of the preceding claims, wherein the communication medium (110) is a wireless medium or wired medium, in particular a bus.

14. Processing unit which is configured to carry out a method according to one of the preceding claims.

15. Computer program which causes a processing unit to carry out a method according to one of Claims 1 to 13 if it is executed on the processing unit, in particular according to Claim 14.

16. Machine-readable storage medium with a computer program according to Claim 15 stored thereon.

## Revendications

1. Procédé pour faire fonctionner un système de communication (100), lequel possède une pluralité d'unités de communication (300, 301, 302, 303, 304) qui sont connectées à un support de communication (110),
**caractérisé en ce que**
l'accès au support de communication (110) est accordé aux unités de communication (300, 301, 302, 303, 304) dans une séquence prédéfinie,
après la fin d'un mode de veille, une unité de communication (300, 301, 302, 303, 304) vérifiant si l'accès lui est accordé puis, pendant une durée de pause (T1, T2), jusqu'à ce que l'accès lui soit probablement de nouveau accordé, rebasculant dans le mode de veille lorsque l'unité de communication (300, 301, 302, 303, 304) n'a pas besoin d'accéder au support de communication (110) ou si aucun accès ne lui est accordé.

2. Procédé selon la revendication 1, l'unité de communication (300, 301, 302, 303, 304), lorsque l'accès au support de communication (110) lui est accordé, accédant au support de communication (110) et rebasculant ensuite dans le mode de veille pendant la durée de pause.

3. Procédé selon la revendication 1 ou 2, un décalage spécifique aux unités et/ou indépendant des unités étant pris en compte lors d'une détermination de la durée de pause (T1, T2).

4. Procédé selon l'une des revendications précédentes, la durée de pause (T1, T2) correspondant à une durée après laquelle l'accès au support de communication (110) est de nouveau accordé à l'unité de communication (300, 301, 302, 303, 304) selon la séquence si aucune des unités de communication (300, 301, 302, 303, 304) qui se trouvent entre ceux-ci n'accède au support de communication (110).

5. Procédé selon l'une des revendications 1 à 3, la durée de pause (T1, T2) correspondant à une durée après laquelle l'accès au support de communication (110) est de nouveau accordé à l'unité de communication (300, 301, 302, 303, 304) selon la séquence si un nombre prédéterminé des unités de communication (300, 301, 302, 303, 304) qui se trouvent entre ceux-ci accèdent au support de communication (110) pendant une durée d'accès prédéterminée.

6. Procédé selon l'une des revendications précédentes, l'unité de communication (300, 301, 302, 303, 304), lors du calcul de la durée de pause (T1, T2), tenant compte d'un instant auquel l'unité de communication (300, 301, 302, 303, 304) recevra probablement un message.

7. Procédé selon l'une des revendications précédentes, le système de communication (100) comprenant une unité de commande (200), l'accès de l'unité de communication (300, 301, 302, 303, 304) au support de communication (110) étant accordé par l'unité de commande (200) par le biais d'un message de demande (21, 22, 23, 24) .

8. Procédé selon l'une des revendications 3 à 7, la durée de pause (T1, T2) étant prédéfinie et/ou influencée de manière statique ou dynamique par l'unité de commande (200) .

9. Procédé selon l'une des revendications 3 à 8, le mode de veille de l'unité de communication (300, 301, 302, 303, 304) étant activé et/ou désactivé par l'unité de commande (200).

10. Procédé selon l'une des revendications 3 à 9, l'unité de communication (300, 301, 302, 303, 304) ne basculant dans le mode de veille qu'après avoir reçu un message de veille de la part de l'unité de commande (200) .

11. Procédé selon l'une des revendications précédentes, l'unité de communication (300, 301, 302, 303, 304) ne rebasculant dans le mode de veille que lorsque la durée de pause (T1, T2) est supérieure à une valeur de seuil prédéterminée.

12. Procédé selon l'une des revendications 3 à 10, l'unité de communication (300, 301, 302, 303, 304) ne rebasculant dans le mode de veille que lorsque la durée de pause (T1, T2) est supérieure à une valeur de seuil prédéterminée, la valeur de seuil étant prédéfinie de manière statique ou dynamique par l'unité de commande (200) .

13. Procédé selon l'une des revendications précédentes, le support de communication (110) étant un support sans fil ou un support filaire, notamment un bus.

14. Unité de calcul, qui est conçue pour mettre en oeuvre un procédé selon l'une des revendications précédentes.

15. Programme informatique qui amène une unité de calcul à mettre en oeuvre un procédé selon l'une des revendications 1 à 13 lorsqu'il est exécuté sur l'unité de calcul, notamment selon la revendication 14.

16. Support d'enregistrement lisible par machine sur lequel est enregistré un programme informatique selon la revendication 15.
